**Europäisches Patentamt**

**European Patent Office**

**Office européen des brevets**

(11) Veröffentlichungsnummer: **0 023 665**
**B1**

# EUROPÄISCHE PATENTSCHRIFT

(45) Veröffentlichungstag der Patentschrift:
**15.02.84**

(51) Int. Cl.³: **C 08 F 2/26**, C 08 F 14/06

(21) Anmeldenummer: **80104323.3**

(22) Anmeldetag: **23.07.80**

(54) **Emulgator für die Herstellung von Polymeren.**

(30) Priorität: **02.04.80 DE 3012822**
**04.08.79 DE 2931674**

(43) Veröffentlichungstag der Anmeldung:
**11.02.81 Patentblatt 81/6**

(45) Bekanntmachung des Hinweises auf die Patenterteilung:
**15.02.84 Patentblatt 84/7**

(84) Benannte Vertragsstaaten:
**BE CH DE FR GB IT LI NL**

(56) Entgegenhaltungen:
**DE - A - 2 015 660**
**DE - A - 2 330 561**
**FR - A - 1 344 971**

(73) Patentinhaber: **BAYER AG, Zentralbereich Patente, Marken und Lizenzen, D-5090 Leverkusen 1, Bayerwerk (DE)**

(72) Erfinder: **Schmidt, Adolf, Dr., Roggendorfstrasse 67, D-5000 Köln 80 (DE)**
Erfinder: **Meier, Helmut, Dr., Am Wasserturm 8, D-5090 Leverkusen 3 (DE)**
Erfinder: **Schedrat, Günther, Wiesdorfer Platz 10, D-5090 Leverkusen 1 (DE)**
Erfinder: **Böckmann, August, Dr., Bärenstrasse 23, D-4150 Krefeld 1 (DE)**

Emulgator für die Herstellung von Polymeren

Die Erfindung betrifft einen Emulgator für die Herstellung von Polymeren auf Basis von Alkalialkansulfonaten und seine Verwendung.

Es ist allgemein bekannt, Alkalialkansulfonate mit hohem Monosulfonatgehalt bei der Emulsionspolymerisation von Vinylchlorid und Vinylchlorid-Mischpolymerisaten allein oder in Kombination mit anderen Emulgatoren einzusetzen (DE-OS 2 429 326).

Es ist aus der DE-OS 2 429 326 bekannt, Alkalialkansulfonate zusammen mit einem Alkali-arylsulfonat als Emulgator bei der Polymerisation des monomeren Vinylchlorids zu verwenden. Die Alkanreste der Alkalialkansulfonate haben eine Kettenlänge von 10 bis 18 Kohlenstoffatomen.

In der DT-OS 2 633 833 wird die Verwendung des Natriumsalzes eines isomeren Gemisches sulfongruppenhaltiger Alkyl-disulfonsäure-diarylester als Emulgator bei der Polyvinylchlorid-Herstellung beschrieben.

Es ist bekannt (Houben-Weyl, Band XIV, Seite 197), dass sich als Polymerisationsemulgatoren nur Alkansulfonate mit hohem Monosulfonatgehalt eignen, während solche mit grösseren Anteilen Di- und Polysulfonat nicht wirksam sein sollen.

Die bekannten Emulgatoren bewirken eine nicht ausreichende Transparenz, einen nicht befriedigenden Gelbwert des Polyvinylchlorids und/oder eine nicht befriedigende antistatische Ausrüstung.

Es wurde ein Emulgator für die Herstellung von Polymerisaten auf Basis von Alkali-alkan-sulfonaten gefunden, der mehr als 50 Gew.-% eines Alkalisalzes einer Polysulfonsäure eines Alkans mittlerer Kettenlänge enthält.

Ein Emulgator im Sinne der vorliegenden Erfindung ist ein Stoffgemisch, welches dazu befähigt ist, das Polymerisat in eine fein verteilte Form zu überführen.

Polysulfonsäuren eines Alkans mittlerer Kettenlänge der erfindungsgemässen Emulgatoren enthalten zwei oder mehr Sulfonsäuregruppen. Vorzugsweise werden Gemische mit verschiedenem Sulfonierungsgrad, im wesentlichen mit zwei und drei Sulfonsäuregruppen, eingesetzt. Der Sulfonierungsgrad liegt im allgemeinen im Bereich von 2 bis 4, bevorzugt von 2 bis 3.

Monosulfonsäuren eines Alkans mittlerer Kettenlänge enthalten dagegen nur eine Sulfonsäuregruppe.

Alkane mittlerer Kettenlänge sind gesättigte, geradkettige oder verzweigte Kohlenwasserstoffe, bevorzugt geradkettige Kohlenwasserstoffe, mit 8 bis 20 Kohlenstoffatomen. Bevorzugt können Polysulfonsäuren von Alkanen mit einer mittleren Kohlenstoffzahl von 13 bis 17 Kohlenstoffatomen verwandt werden.

Im allgemeinen werden Sulfonsäuren von Alkanen verschiedener Kettenlänge eingesetzt.

Als Alkalisalze seien im wesentlichen die Natrium- und Kaliumsalze genannt.

Die Herstellung der Alkalisalze der Alkansulfonsäuren ist an sich bekannt.

Beispielsweise kann man sie durch Sulfochlorierung der Alkane und anschliessender Verseifung mit einem Alkalihydroxyd herstellen (Chemie und Technologie der Paraffin-Kohlenwasserstoffe, Akademie-Verlag-Berlin, 1956, Seiten 395 bis 474).

Man erhält erfindungsgemässe Emulgatoren mit einem hohen Anteil an Polysulfonsäuren bzw. deren Alkalisalze, wenn man beispielsweise die Alkane möglichst weitgehend sulfochloriert und anschliessend verseift. Noch vorhandene Anteile an Monosulfonsäuren können abgetrennt werden. Eine Abtrennung kann beispielsweise erfolgen durch Extraktion mit Diethylether.

Erfindungsgemäss enthalten die Emulgatoren mehr als 50 Gew.-% eines Alkalisalzes einer Polysulfonsäure eines Alkans mittlerer Kettenlänge. Diese Emulgatoren bewirken eine besonders hohe Transparenz, einen niedrigen Gelbwert und günstige antistatische Eigenschaften des Polyvinylchlorids. Diese Eigenschaften sind bei guten antistatischen Werten besonders hervorragend, wenn ein Emulgator eingesetzt wird, der nur aus dem Alkalisalz einer Alkanpolysulfonsäure besteht und praktisch keine Monosulfonsäure-Anteile enthält.

Die Herstellung solcher Emulgatoren ist jedoch mit einem erhöhten Aufwand verbunden, so dass man in der Praxis ohne nennenswerte Verluste an Qualität des Emulgators leichter herstellbare Emulgatoren mit einem gewissen Gehalt an Alkanmonosulfonsäure verwendet.

Bevorzugt werden daher für die Herstellung von Polymerisaten Emulgatoren, die ausser dem Alkalisalz der Alkanpolysulfonsäure noch weniger als 50 Gew.-% einer Alkali-Alkanmonosulfonsäure enthalten, eingesetzt. Insbesondere bevorzugt sind Emulgatoren, die 20 bis 40 Gew.-% eines Alkalisalzes einer Monosulfonsäure und 60 bis 80 Gew.-% eines Alkalisalzes einer Polysulfonsäure enthalten.

Die Menge des erfindungsgemässen Emulgators, die dem Polyvinylchlorid zugesetzt wird, ist variabel. Im allgemeinen setzt man 0,5 bis 3 Gew.-%, bevorzugt 1 bis 2 Gew.-%, bezogen auf das Vinylchlorid, zu.

Die erfindungsgemässen Emulgatoren können als Hilfsmittel bei der Herstellung von Polymeren aus den entsprechenden, radikalisch polymerisierbaren Monomeren verwendet werden. Beispielsweise können die folgenden Polymeren hergestellt werden:

Polyethylen, Polybutadien, Polychloropren, Polystyrol, Polyvinylchlorid, Polyvinylidenchlorid, Polyvinylacetat, Polyvinylpropionat, Polyacrylnitril, Polymethacrylnitril, Polyacrylsäureester wie Polymethylacrylat, Polyethylacrylat, Poly-n-Butylacrylat, Poly-2-Ethylhexylacrylat, Poly-methacrylsäureester wie Poly-methylmethacrylat, Poly-ethyl-methacrylat, Poly-n-Butylmethacrylat.

Die Polymerisate können löslich oder vernetzt sein.

Auch Copolymerisate aus den genannten Monomereinheiten sind in Gegenwart der erfindungsgemässen Emulgatoren herstellbar.

Die erfindungsgemässen Emulgatoren werden besonders zur Herstellung von Polyvinylchlorid und Polyvinylchlorid-Mischpolymerisaten verwendet. Der Emulgator kann dem monomeren Vinylchlorid vor der Polymerisation aber auch nach der Polymerisation, z.B. bei der Verarbeitung des Polymerisats im Kalander, zugesetzt werden. Hierdurch wird die Transparenz, der Gelbwert und das antistatische Verhalten des Polyvinylchlorids bzw. des Copolymerisates verbessert.

Bei kalandrierbarem Suspensionspolyvinylchlorid können die erfindungsgemässen Emulgatoren vorzugsweise vor oder während des Kalandrierens des Polyvinylchlorids zugesetzt werden. Bei Emulsionspolyvinylchlorid werden die erfingungsgemässen Emulgatoren gewöhnlich bei der Polymerisation des Vinylchlorids zugesetzt.

Vinylchlorid kann in Gegenwart des erfindungsgemässen Emulgators beispielsweise wie folgt polymerisiert werden:

Vinylchlorid wird in wässrigem Medium mit einer erfindungsgemässen Menge des Emulgators im Temperaturbereich von 40 bis 80 °C gemischt. Als Polymerisations-Initiatoren können die an sich bekannten wasserlöslichen Perverbindungen, wie beispielsweise Alkalipersulfate, Wasserstoffperoxid, tert.-Butylhydroperoxid, verwendet werden. Es können aber auch in Wasser unlösliche, monomerenlösliche organische Peroxide eingesetzt werden.

Die Polymerisation kann auch durch Redox-Initiatorsysteme wie beispielsweise Kaliumpersulfat-Natriumformaldehyd-sulfoxylat oder Persulfat-Pyrosulfit, gegebenenfalls in Gegenwart geringer Anteile an komplex gebundenen Schwermetallionen wie z.B. Eisen(II)lonen eingeleitet werden. Als Puffer zur Regulation des Polymerisationsprozesses können beispielsweise Natriumcarbonat, Natriumbicarbonat und Alkaliphosphat eingesetzt werden.

Nach der Polymerisation kann beispielsweise die wässrige Phase abgetrennt und das Polymerisat durch Sprühtrocknung getrocknet werden.

Das nach Sprühtrocknung erfindungsgemäss hergestellte aus wässriger PVC-Dispersionen anfallende PVC-Pulver lässt sich nach Zusatz üblicher Weichmacher wie beispielsweise Dioctylphthalat, Dioctyladipat, Benzylbutylphthalat, Alkylsulfonsäureestern des Phenols oder Phosphorsäureestern wie Trioctylphosphat, Diphenylkresylphosphat im Verhältnis 60 Gew.-Teile PVC: 40 Gew.-Teile Weichmacher über Mischvorrichtungen zu Plastisolen verarbeiten. Diese Plastisole halten nach ca. 30 Stunden ihre Viskosität über lange Zeiträume (4–6 Wochen) praktisch konstant.

Das erhaltene Polyvinylchlorid kann aber auch in üblicher Weise beispielsweise auf einem Kalander, bearbeitet werden. Man erhält hierbei Folien oder Felle.

Es ist möglich die erfindungsgemässen Emulgatoren mit anderen Dispergatoren und Emulgatoren zu mischen. Beispielsweise seien genannt: Alkylbenzolsulfonate, Alkylsulfate, Alkylaryl-polyglykolether und Alkylpolyglykolether.

Es ist auch möglich, den Monosulfonsäureanteil ganz oder teilweise durch andere Emulgatoren zu ersetzen.

Es ist überraschend, dass man durch Verwendung eines Emulgators mit mehr als 50 Gew.-% eines Alkalisalzes einer Alkanpolysulfonsäure die Transparenz und den Gelbwert bei günstigen antistatischen Eigenschaften des Polyvinylchlorids wesentlich verbessern kann.

Beispiel 1
(Herstellung des Emulgators)

Ein Gemisch linearer Alkane (8 bis 20 Kohlenstoffatome im Molekül, mittlere Zahl der Kohlenstoffatome ist 15) wird in Gegenwart von Licht mit einem Gasgemisch, bestehend aus 1,1 Gewichtsteil Schwefeldioxid und 1,0 Gewichtsteil Chlor bei einer Temperatur von 30 bis 40 °C unter Rühren und gleichzeitigem Kühlen sulfochloriert. Die Sulfochlorierung wird so lange durchgeführt, bis das Reaktionsgemisch eine Dichte von 1,165 g/cm³ bei 45 °C hat. Der Sulfochlorgehalt ist dann bei 15,5 bis 16,0 Gew.-%.

200 g des Sulfonierungsgemisches werden tropfenweise zu 144 g 50 Gew.-% Natronlauge gegeben, die auf 50 bis 60 °C erwärmt wurde. Durch Kühlen wird das Reaktionsgemisch auf eine Temperatur von 95 bis 100 °C gehalten. Nach Beendigung der Umsetzung wird das Reaktionsgemisch durch Zugabe von konzentrierter Natronlauge auf einen pH-Wert von 9 bis 10 eingestellt. Anschliessend kühlt man das Reaktionsgemisch auf 60 bis 70 °C ab.

In diesem Temperaturbereich fällt Natriumchlorid aus, das abfiltriert oder abzentrifugiert wird. Die praktisch natriumchloridfreie Lösung wird im Vakuum zur Trockne eingedampft. Man erhält hierbei 220 g Natrium-alkan-sulfonat. Das Natrium-alkan-sulfonat besteht aus:
28 Gew.-% Natrium-alkan-monosulfonat
67 Gew.-% Natrium-alkan-polysulfonat.

Das so erhaltene Natrium-alkan-sulfonat wird als Emulgator für die Polymerisat-Herstellung eingesetzt.

Beispiel 2
(Herstellung des Polyvinylchlorids
nach halbkontinuierlichem Verfahren)

| Autoklavengrösse | 40 l |
|---|---|
| Temperatur | 48 °C |
| Rührer | Blattrührer |
| Druck | 5,6 bis 9,1 bar |

Ansatz:

Wasser     12 000 g ⎫
Emulgator nach Beispiel 1     20 g ⎬ A
Natriumbicarbonat     40 g ⎮
Kaliumperoxodisulfat     26 g ⎭
Vinylchlorid     3000 g } B
Wasser     3600 g ⎫
Emulgator nach Beispiel 1     200 g ⎬ C
Natriumbicarbonat     20 g ⎭
Vinylchlorid     12 600 g } D

Herstellung:

A wurde in dem Autoklav vorgelegt und der Sauerstoff in diesem durch Begasen mit Stickstoff entfernt.

Dann wurde B zugesetzt und das Gemisch unter Rühren auf 48 °C aufgeheizt.

Beim Polymerisationsstart wurde ausserdem 1 g Natriumsalz der Methylenhydroxy-sulfonsäure in 200 ml Wasser zugeführt.

Innerhalb von 6 Stunden wurden dann C und D gemeinsam zudosiert.

Nach der Entfernung des restlichen Vinylchlorids kann der Latex ausgetragen werden.

Es resultiert ein koagulatfreier Latex mit einem Feststoffgehalt von ca. 50 Gew.-%.

Die mit dem erfindungsgemässen Emulgator herstellbaren Dispersionen ergeben nach dem Sprühtrocknen PVC-Pulver mit erkennbaren verbesserten Eigenschaften, insbesondere verbesserter Transparenz, niedrigerem Gelbwert und gutem antistatischen Verhalten. Nach Zusatz der üblichen Weichmacher resultieren PVC-Plastisole mit verbesserten rheologischen Eigenschaften.

Bei Verwendung vergleichbarer Mengen anderer üblicher Emulgatoren – wie z. B. Natriumalkansulfonate mit 80–90% Monosulfat und 10–20 Polysulfonatgehalt – erhält man Dispersionen, welche nach dem Sprühtrocknen Pulver und daraus hergestellte PVC-Pasten mit ungünstigerem rheologischen Verhalten liefern.

## Beispiel 3

Nach dem unter 2 beschriebenen Verfahren lassen sich Copolymerisate herstellen.

So können z.B. bis zu 50% Vinylchlorid durch Vinylacetat ersetzt werden. Ebenso können auch andere Monomere wie z.B. Ethylen, Propylen u.a. in der Regel bis zu 20% der Vinylchloridmenge zur Herstellung von Copolymeren des Vinylchlorids eingesetzt werden.

## Beispiel 4

1,5 g des Emulgators nach Beispiel 1 werden 50 g eines nach dem Suspensionsverfahren hergestellten Polyvinylchlorids vor dem Kalandrieren zugemischt. Man erhält auch hier Folien bzw. Felle mit ausgezeichnetem Gelbwert, sehr guter Transparenz und guten antistatischen Effekten.

## Beispiel 5

1,5 g des Emulgators nach Beispiel 1 werden 50 g nach dem Emulsionsverfahren hergestellten Polyvinylchlorids vor dem Kalandrieren zugemischt. Man erhält auch hier Folien bzw. Felle mit guten antistatischen Eigenschaften und sehr guter Transparenz.

## Beispiel 6

(Bestimmung der Durchlässigkeit und des Gelbwertes von Polyvinylchlorid und verschiedenen Anteilen an Mono- und Polysulfonsäuren)

Für die Messungen wurde Suspensions-Polyvinylchlorid verwandt, dem der Emulgator vor dem Kalandrieren zugesetzt wurde. Den einzelnen Proben wurde jeweils 3 Gew.-% Emulgatoren mit verschiedenen Mono-/Polysulfonatanteilen zugesetzt.

Die erhaltenen Ergebnisse sind der folgenden Tabelle zu entnehmen.

Die Durchlässigkeit wurde in einem handelsüblichen Spektralphotometer im Wellenbereich von 380 bis 700 nm gemessen.

Der Gelbwert wurde nach ASTM 313–667 ebenfalls mit dem o.a. Spektralphotometer bestimmt.

Tabelle I: Anteil an Emulgator

| Monosulfonsäure [%] | Polysulfonsäure [%] | Durchlässigkeit [%] | Gelbwert |
|---|---|---|---|
| 90 | 10 | 31 | 54 |
| 85 | 15 | 35 | 49 |
| 50 | 50 | 38 | 24 |
| 30 | 70 | 43 | 15 |
| 20 | 80 | 58 | 14,5 |
| ohne Emulgator | | 79 | 5 |

## Beispiel 7

Es wird gezeigt, dass der erfindungsgemässe Emulgator, hergestellt gemäss Beispiel 1, zur Herstellung von verschiedenartigen Polymerisatdispersionen verwendet werden kann.

Die Emulsionspolymerisationen werden in einem 6-Liter-Rührautoklav durchgeführt, welcher bis zu einem Druck von 20 bar belastbar ist.

In Tabelle II ist eine Reihe von Polymerisationsbeispielen zusammengestellt.

Rührgeschwindigkeit des Blattrührers bei allen Versuchen: 125 Umdrehungen pro Minute. Wasser und Emulgatorlösung werden mit dem darin gelösten Initiator ($K_2S_2O_8$) und gegebenenfalls Dodecylmercaptan (zur Regulierung des Molekulargewichts) vorgelegt und der Luftsauerstoff durch mehrmaliges Evakuieren des freien Autoklavraums und Ausgleichen mit neuem Stickstoff entfernt.

Nach Zugabe der Monomeren wird unter Rühren auf die gewünschte Polymerisationstemperatur aufgeheizt und diese während der gesamten Polymerisationszeit konstant gehalten.

Nach Abkühlen auf ca. 20 °C wird der Autoklav gegebenenfalls auf Atmosphärendruck entspannt, der Latex abgelassen und durch ein 50 µm-Perlongewebe mit quadratischen Maschen filtriert. Das auf dem Filter zurückbleibende Koagulat wurde mit Wasser gewaschen und zur Gewichtskonstanz getrocknet. Von dem filtrierten Latex wurde der Feststoffgehalt bestimmt.

Tabelle II: Erläuterungen vgl. Text zu Beispiel 7

| Versuch | | 7.1 | 7.2 | 7.3 | 7.4 | 7.5 |
|---|---|---|---|---|---|---|
| Entionisiertes Wasser | (g) | 1700 | 1700 | 1700 | 1700 | 1700 |
| 5%ige wässrige Lösung des Emulgators gemäss Beispiel 1 | (g) | 1300 | 1300 | 1300 | 1300 | 1300 |
| Dodecylmercaptan | (g) | – | 8,0 | – | – | – |
| Kaliumperoxodisulfat | (g) | 4,4 | 4,4 | 4,4 | 4,4 | 4,4 |
| Vinylchlorid | (g) | 1580 | – | – | – | – |
| Butadien | (g) | – | 1120 | – | – | – |
| Styrol | (g) | – | 460 | 1580 | – | 790 |
| n-Butylacrylat | (g) | – | – | – | 1000 | 790 |
| Acrylnitril | (g) | – | – | – | 580 | – |
| Polymerisationstemperatur | (°C) | 50 | 50 | 70 | 60 | 70 |
| Polymerisationszeit | (h) | 12 | 20 | 7 | 7 | 7 |
| Feststoffgehalt Latex | (Gew.-%) | 33,5 | 34,2 | 34,8 | 35,0 | 34,9 |
| Koagulat | (g) | 0,5 | 5 | 1,5 | 0,9 | 0,7 |

## Patentansprüche

1. Emulgatorgemisch für die Herstellung von Polymerisaten mit einem Gehalt an einem Alkalisalz einer Polysulfonsäure eines Alkans mittlerer Kettenlänge, dadurch gekennzeichnet, dass er einen Anteil von mehr als 50 Gew.-% des Alkalisalzes enthält.

2. Emulgatorgemisch nach Anspruch 1, enthaltend weniger als 50 Gew.-% eines Alkalisalzes einer Mono-sulfonsäure und über 50 Gew.-% eines Alkalisalzes einer Polysulfonsäure eines Alkans mittlerer Kettenlänge.

3. Emulgatorgemisch nach Anspruch 2, enthaltend 20 bis 40 Gew.-% eines Alkalisalzes einer Mono-sulfonsäure und 60 bis 80 Gew.-% eines Alkalisalzes einer Polysulfonsäure eines Alkans mittlerer Kettenlänge.

## Claims

1. Emulsifier mixture for the preparation of polymers, containing an alkali metal salt of a polysulphonic acid of an alkane of medium chain length, characterised in that it contains a proportion of more than 50% by weight of the alkali metal salt.

2. Emulsifier mixture according to Claim 1, containing less than 50% by weight of an alkali metal salt of a monosulphonic acid and more than 50% by weight of an alkali metal salt of a polysulphonic acid of an alkane of medium chain length.

3. Emulsifier mixture according to Claim 2, containing 20 to 40% by weight of an alkali metal salt of a monosulphonic acid and 60 to 80% by weight of an alkali metal salt of a polysulphonic acid of an alkane of medium chain length.

## Revendications

1. Mélange émulsifiant pour la fabrication de polymères, ayant une teneur en un sel alcalin d'un acide polysulfonique d'un alcane de longueur de chaîne moyenne, caractérisé en ce qu'il contient une proportion supérieure à 50% en poids du sel alcalin.

2. Mélange émulsifiant selon la revendication 1, contenant moins de 50% en poids d'un sel alcalin d'un acide mono-sulfonique et plus de 50% en poids d'un sel alcalin d'un acide polysulfonique d'un alcane de longueur de chaîne moyenne.

3. Mélange émulsifiant selon la revendication 2, contenant 20 à 40% en poids d'un sel alcalin d'un acide mono-sulfonique et 60 à 80% en poids d'un sel alcalin d'un acide polysulfonique d'un alcane de longueur de chaîne moyenne.